(19)

**Europäisches Patentamt**
**European Patent Office**
**Office européen des brevets**

(11) **EP 4 654 091 A1**

(12) **EUROPEAN PATENT APPLICATION**

(43) Date of publication:
26.11.2025 Bulletin 2025/48

(21) Application number: 25178084.7

(22) Date of filing: 21.05.2025

(51) International Patent Classification (IPC):
**G06N 10/40** (2022.01) **H04B 10/70** (2013.01)

(52) Cooperative Patent Classification (CPC):
**G06N 10/40; H04B 10/70**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: 23.05.2024 US 202463651193 P

(71) Applicant: IonQ, Inc.
College Park, MD 20740 (US)

(72) Inventors:
• **VITERI, Cesar Ricardo**
College Park, Maryland, 20740 (US)
• **RATCLIFFE, Alexander Kevin**
College Park, Maryland, 20740 (US)
• **MOORE, Isam Daniel**
College Park, Maryland, 20740 (US)
• **SHOJAEE, Ezad**
College Park, Maryland, 20740 (US)

(74) Representative: **Carroll, Christopher P.**
**Boston & Galway**
**Golden Cross House**
**8 Duncannon Street**
**London WC2N 4JF (GB)**

(54) **SWAPPING QUANTUM INFORMATION BETWEEN MIXED SPECIES OR ISOTOPES ION PAIRS USING NON-ADIABATIC GATES**

(57) Aspects of the present disclosure relate to interconnecting mixed species qubit entanglements with non-adiabatic gates. Methods include entangling at least a pair of interconnect qubits using photonic interconnects via a reconfigurable photonic entangler configured to entangle a pair of communication qubits from a plurality of quantum processing units (QPUs) such that photons entangled with interconnect qubit states are collected in optical fibers. Each QPU includes non-interconnect qubits, an interconnect qubit coupled to the reconfigurable photonic entangler with an optical fiber, and a non-adiabatic gate coupling the interconnect qubit to the plurality of non-interconnect qubits. Methods also include transferring information from the pair of entangled interconnect qubits to a respective non-communication qubit using the non-adiabatic gate. Methods further include executing at least one quantum computation on at least one of the plurality of QPUs using a non-interconnect qubit as a resource for at least one gate between the plurality of QPUs.

FIG. 6

**Description**

**TECHNICAL FIELD**

Aspects of the present disclosure relate generally to systems and methods for use in the implementation, operation, and/or use of quantum information processing (QIP) systems.

**BACKGROUND**

Trapped atoms are one of the leading implementations for quantum information processing or quantum computing. Atomic-based qubits may be used as quantum memories, as quantum gates in quantum computers and simulators, and may act as nodes for quantum communication networks. Qubits based on trapped atomic ions enjoy a rare combination of attributes. For example, qubits based on trapped atomic ions have very good coherence properties, may be prepared and measured with nearly 100% efficiency, and are readily entangled with each other by modulating their Coulomb interaction with suitable external control fields such as optical or microwave fields. These attributes make atomic-based qubits attractive for extended quantum operations such as quantum computations or quantum simulations.

It is therefore important to develop new techniques, such as quantum gate teleportation and advanced gate designs, to improve the design, fabrication, implementation, control, and/or functionality of different QIP systems used as quantum computers or quantum simulators, and particularly for those QIP systems that handle operations based on atomic-based qubits.

**SUMMARY**

The following presents a simplified summary of one or more aspects to provide a basic understanding of such aspects. This summary is not an extensive overview of all contemplated aspects and is intended to neither identify key or critical elements of all aspects nor delineate the scope of any or all aspects. Its sole purpose is to present some concepts of one or more aspects in a simplified form as a prelude to the more detailed description that is presented later.

This disclosure describes various aspects of techniques for transferring quantum information between different types of qubits in the context of quantum error correction, quantum networks, quantum gate teleportation and distributed quantum computing.

In some aspects of the present disclose, a method for interconnecting mixed species qubit entanglements with non-adiabatic gates is described. The method includes entangling at least a pair of interconnect qubits using photonic interconnects via a reconfigurable photonic entangler configured to entangle a pair of communication qubits from a plurality of quantum processing units (QPUs) such that photons entangled with interconnect qubit states are collected in optical fibers. Each QPU may include at least a plurality of non-interconnect qubits, an interconnect qubit coupled to the reconfigurable photonic entangler with an optical fiber, and a non-adiabatic gate coupling the interconnect qubit to the plurality of non-interconnect qubits. The method may also include transferring information from the pair of entangled interconnect qubits to a respective non-communication qubit using the non-adiabatic gate. The method may further include executing at least one quantum computation on at least one of the plurality of QPUs using a non-interconnect qubit as a resource for at least one gate between the plurality of QPUs.

In some aspects of this preset disclosure, a system configured to interconnect mixed species qubit entanglements with non-adiabatic gates is described. The system includes a reconfigurable photonic entangler configured to entangle a pair of communication qubits from a plurality of quantum processing units (QPUs) such that photons entangled with interconnect qubit states are collected in optical fibers. Each QPU may include at least a plurality of non-interconnect qubits, an interconnect qubit coupled to the reconfigurable photonic entangler with an optical fiber, and a non-adiabatic gate coupling the interconnect qubit to the plurality of non-interconnect qubits. The system may also include an optical system configured to generate pairs of optical pulses. The system may also include an ion trap configured to trap a first trapped ion of multiple arrays of trapped ions, the ion trap having a trapping potential that switchable between a first trapping potential and a second trapping potential. The system may also include a controller configured to control the reconfigurable photonic entangler, the optical system, or the ion trap to: entangle at least a pair of interconnect qubits using photonic interconnects via the reconfigurable photonic entangler, transfer information from the pair of entangled interconnect qubits to a respective non-communication qubit using the non-adiabatic gate, and executing at least one quantum computation on at least one of the plurality of QPUs using a non-interconnect qubit as a resource for at least one gate between the plurality of QPUs.

To the accomplishment of the foregoing and related ends, the one or more aspects comprise the features hereinafter fully described and particularly pointed out in the claims. The following description and the annexed drawings set forth in detail certain illustrative features of the one or more aspects. These features are indicative, however, of but a few of the various ways in which the principles of various aspects may be employed, and this description is intended to include all such aspects and their equivalents.

## BRIEF DESCRIPTION OF THE DRAWINGS

The disclosed aspects will hereinafter be described in conjunction with the appended drawings, provided to illustrate and not to limit the disclosed aspects, wherein like designations denote like elements, and in which:

FIG. 1 illustrates a view of atomic ions in a linear crystal or chain in accordance with aspects of this disclosure.
FIG. 2 illustrates an example of a quantum information processing (QIP) system in accordance with aspects of this disclosure.
FIG. 3 illustrates an example of a computer device in accordance with aspects of this disclosure.
FIG. 4 shows an example of states (or qubit states) of a trapped ion in an array of trapped ions of a QPU in accordance with aspects of this disclosure.
FIG. 5 shows an exemplary QIP system according to an implementation of the present disclosure.
FIG. 6 illustrates an example of a photonic interconnect architecture in accordance with aspects of this disclosure.
FIGS. 7A-C illustrate an example of a photonic interconnect protocol on a QIP system using a photonic entangler and single QPUs in accordance with aspects of this disclosure.
FIG. 8 illustrates interconnect qubit states and photon polarization states in accordance with aspects of this disclosure.
FIGS. 9A-C illustrates an example of an implementation of state dependent kicks (SDKs) in a dual isotopes chain in accordance with aspects of this disclosure.
FIG. 10 illustrates a method for interconnecting mixed species qubit entanglements with non-adiabatic gates using a QIP system.
FIG. 11 illustrates an example of a QIP system in accordance with aspects of this disclosure.

Like reference numbers and designations in the various drawings indicate like elements.

## DETAILED DESCRIPTION

The detailed description set forth below in connection with the appended drawings or figures is intended as a description of various configurations or implementations and is not intended to represent the only configurations or implementations in which the concepts described herein may be practiced. The detailed description includes specific details for the purpose of providing a thorough understanding of various concepts. However, it will be apparent to those skilled in the art that these concepts may be practiced without these specific details or with variations of these specific details. In some instances, well known components are shown in block diagram form, while some blocks may be representative of one or more well-known components.

Distributed quantum computing includes methods for processing information that utilizes quantum two-level systems or quantum bits (qubits) as the fundamental unit of information storage. Quantum computing can further leverage entanglement between qubits, natively generated in quantum computing C platforms, to perform computations with fewer resources (e.g., computation time, number of bits, etc.) than classical computing schemes.

The exchange of quantum information between different types of qubits is important for distributed quantum computing, quantum networking, quantum error correction, optical clocks, spectroscopy, and exotic species for testing fundamental physics. For quantum networks using ion traps, at least two types of qubits are used - first quantum states for memory or computations, and second quantum states for communication. Photonic interconnects enable two remote stationary communication qubits (or network qubits) to become entangled. Trapped ions can emit optical fields that carry quantum information. These photons, being entangled with the ions, can then carry quantum information about the ion's state to remote systems.

However, combining different qubit types in a single ion species is challenging because an atomic element suitable for quantum communication is not necessarily also a good memory qubit with sufficient isolation from network activity. As an illustrative example, Zeeman qubits may be used for communication and proposed photonic interconnect schemes rely on short decoherence time (e.g., few ms) Zeeman qubits for interconnect (or communication) ions. In order to keep higher fidelities, quantum information should be transferred to a memory or a computational qubit at least two orders magnitude faster than the communication qubit decoherence time. Following on the illustrative example, given that Zeeman qubits decohere in milliseconds timescales, the faster quantum information is removed from the Zeeman levels, the higher the fidelity of the information swap operation. Although the present disclosure may describe the present implementation in view of using Zeeman qubits for communication, it should be noted that the present disclosure may be implemented to any use case of entanglement between mixed species or isotopes ions.

In trapped-ion quantum computers, entanglement between two qubits is typically realized by applying optical state-dependent displacements to the ions. Adiabatic gates use the coupled motion of ions in the same trap potential for entanglement. Non-adiabatic (e.g., fast gates) are fundamentally different than adiabatic gates as they do not address specific trap normal modes. Instead, adiabatic gates use state or spin dependent kicks (SDKs) to move ions at speeds much faster than the natural trap period. Non-adiabatic gates excite all normal modes at once and then carefully deexcite them.

A common adiabatic gate is the Molmer-Sorensen (MS) gate. This gate can be implemented in a chain of trapped ions by shining laser light on the two qubits to be entangled. In MS gates, an optimization finds laser parameters (i.e., intensity, phase, frequency time profiles) that continuously couple and decouple the spins of two qubits to and from the motional mode. In order to achieve a pure spin-spin coupling the spin-motion coupling term must return to zero for each mode. For some chosen combination of spin pairs (i.e., |00> and |11>, or |01> and |10>) phase is accumulated during this operation. Each mode has to be resolved spectroscopically, and although the trap period is in the order of MHz, the mode separation is only a few kHz.

Multispecies trapped-ion gates have been demonstrated using MS and light shift (LS) gates. These gates use state-dependent gates adiabatic transitions that address motional sidebands to alter ion trajectories. To swap quantum information between two multispecies or multi-isotopes, few MS or LS gates in addition to single qubit rotations are required, and the entire operation takes several hundreds of microseconds.

To this end, a faster alternative to these types of adiabatic gates is needed. The speed and fidelity of non-adiabatic gates (e.g., fast gates) are limited only by the laser and control electronics parameters, rather than by artificial limits such as the need to satisfy an adiabaticity condition. Instead, the fast gates apply state-dependent momentum kicks (SDKs) to the ions as hard and as quickly as possible. Ion motion is restored and the correct total phase is accumulated via careful choice of picosecond pulses and free ion evolution sequences.

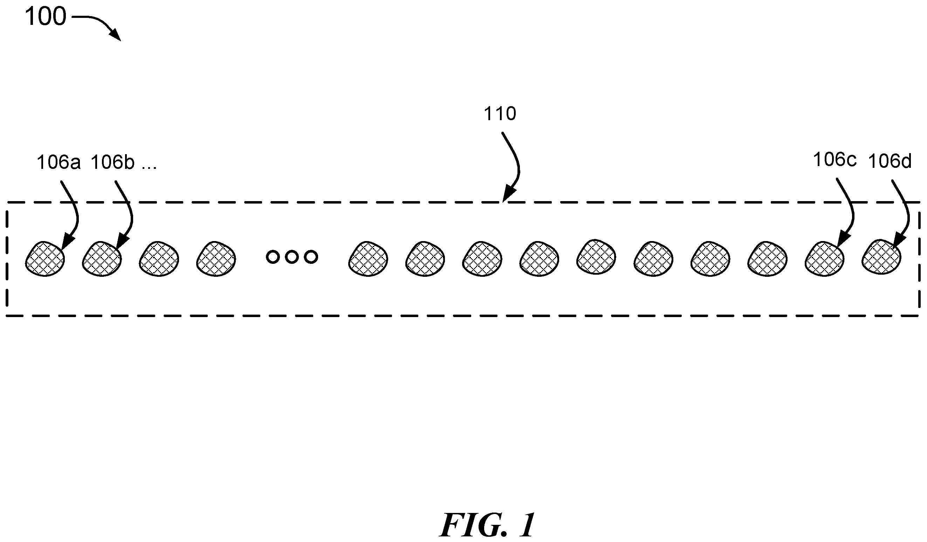

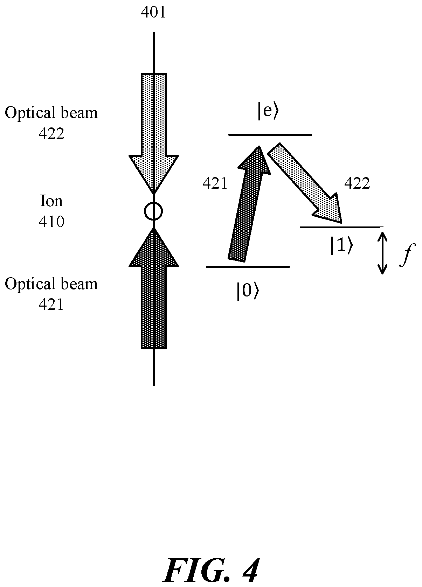

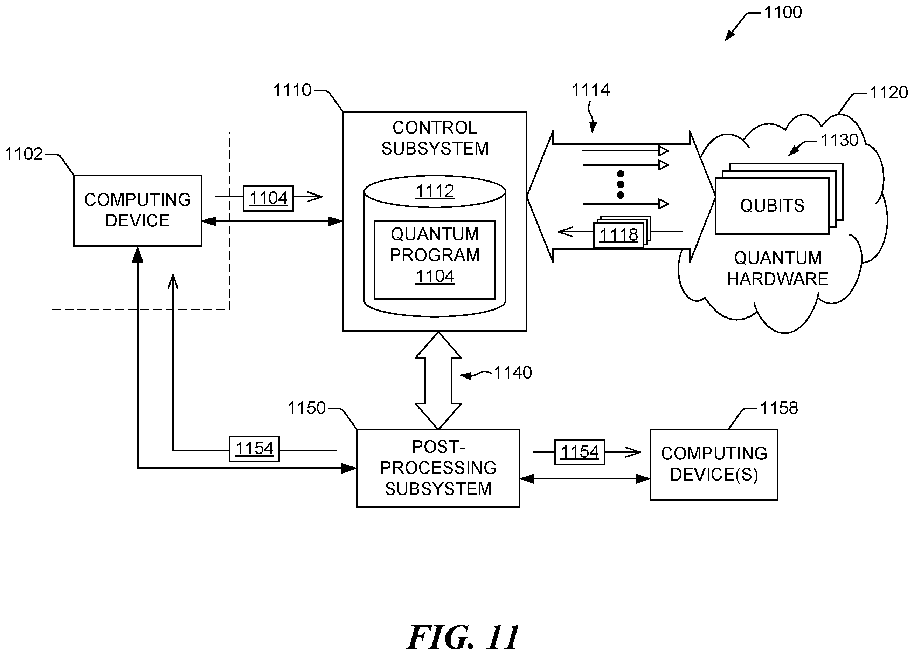

Solutions to the issues described above are explained in more detail in connection with FIGS. 1-11, with FIGS. 1-3 providing a general disclosure of quantum information processing (QIP) systems or quantum computers, and more specifically, of atomic based QIP systems or quantum computers, FIGS. 4-10 provide descriptions and examples of implementing non-adiabatic gates to speed up the transfer of quantum information from communication interface ion qubits to either memory or computational qubits, in accordance with various example aspects of the present disclosure. In addition, FIG. 11 illustrating a QIP system on which aspects of systems and methods for interconnecting mixed species or isotopes qubit entanglements via non-adiabatic gates according to aspects of the present disclosure.

Atomic quantum computers can include array(s) of atoms or ions trapped, for example, inside a vacuum chamber. A size and dimensionality of atomic arrays may vary.

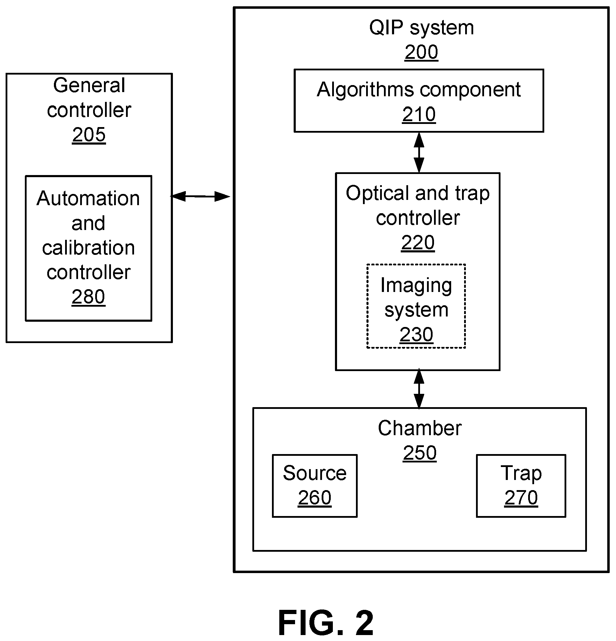

**FIG. 1** illustrates a diagram 100 with multiple atomic ions or ions 106 (e.g., ions 106a, 106b, ..., 106c, and 106d) trapped in a linear crystal or chain 110 using a trap (not shown; the trap can be inside a vacuum chamber as shown in FIG. 2). The trap maybe referred to as an ion trap. The ion trap shown may be built or fabricated on a semiconductor substrate, a dielectric substrate, or a glass die or wafer (also referred to as a glass substrate). The ions 106 may be provided to the trap as atomic species for ionization and confinement into the chain 110. Some or all of the ions 106 may be configured to operate as qubits in a QIP system.

In the example shown in FIG. 1, the trap includes electrodes for trapping or confining multiple ions into the chain 110 laser-cooled to be nearly at rest. The number of ions trapped can be configurable and more or fewer ions may be trapped. The ions can be ytterbium ions (e.g., $^{171}Yb^+$ ions), for example. The ions are illuminated with laser (optical) radiation tuned to a resonance in $^{171}Yb^+$ and the fluorescence of the ions is imaged onto a camera or some other type of detection device (e.g., photomultiplier tube or PMT). In this example, ions may be separated by a few microns ($\mu$m) from each other, although the separation may vary based on architectural configuration. The separation of the ions is determined by a balance between the external confinement force and Coulomb repulsion and does not need to be uniform. Moreover, in addition to ytterbium ions, barium ions, neutral atoms, Rydberg atoms, or other types of atomic-based qubit technologies may also be used. Moreover, ions of the same species, ions of different species, and/or different isotopes of ions may be used. The trap may be a linear RF Paul trap, but other types of confinement devices may also be used, including optical confinements. Thus, a confinement device may be based on different techniques and may hold ions, neutral atoms, or Rydberg atoms, for example, with an ion trap being one example of such a confinement device. The ion trap may be a surface trap, for example.

The chain 110 of ions 106 may be part of a QPU, that is, the chain 110 of ions 106 may be part of a processing engine or processing core of a QIP system. When any one of the ions 106 is capable of being connected to any other ion 106 in the chain 110, the chain 110 is considered to be fully connected, and thus, it can be used to implement a fully connected QPU. Fully connected QPUs need not be limited to atomic-based QIP systems.

**FIG. 2** illustrates a block diagram that shows an example of a QIP system 200. The QIP system 200 may also be referred to as a distributed quantum computing system, a quantum computer, a computer device, a trapped ion system, or the like. The QIP system 200 may be part of a hybrid computing system in which the QIP system 200 is used to perform quantum computations and operations and the hybrid computing system also includes a classical computer to perform classical computations and operations. The quantum and classical computations and operations may interact in such a hybrid system.

Shown in FIG. 2 is a general controller 205 configured to perform various control operations of the QIP system 200. These control operations may be performed by an operator, may be automated, or a combination of both. Instructions for at least some of the control operations may be stored in memory (not shown) in the general controller 205 and may be updated over time through a communications interface (not shown). Although the general controller 205 is shown separate from the QIP system 200, the general controller 205 may be integrated with or be part of the QIP system 200. The general controller 205 may include an automation and calibration controller 280 configured to perform various calibration, testing, and automation operations associated with the QIP system 200. These calibration, testing, and automation operations may involve, for example, all or part of an algorithms component 210, all or part of an optical and trap controller 220 and/or all or part of a chamber 250.

The QIP system 200 may include the algorithms component 210 mentioned above, which may operate with other parts of the QIP system 200 to perform or implement quantum algorithms, quantum applications, or quantum operations. The algorithms component 210 may be used to perform or implement a stack or sequence of combinations of single qubit operations and/or multi-qubit operations (e.g., two-qubit operations) as well as extended quantum computations. The algorithms component 210 may also include software tools (e.g., compilers) that facility such performance or implementation. As such, the algorithms component 210 may provide, directly or indirectly, instructions to various components of the QIP system 200 (e.g., to the optical and trap controller 220) to enable the performance or implementation of the quantum algorithms, quantum applications, or quantum operations. The algorithms component 210 may receive information resulting from the performance or implementation of the quantum algorithms, quantum applications, or quantum operations and may process the information and/or transfer the information to another component of the QIP system 200 or to another device (e.g., an external device connected to the QIP system 200) for further processing.

The QIP system 200 may include the optical and trap controller 220 mentioned above, which controls various aspects of a trap 270 in the chamber 250, including the generation of signals to control the trap 270. The optical and trap controller 220 may also control the operation of lasers, optical systems, and optical components that are used to provide the optical beams that interact with the atoms or ions in the trap. Optical systems that include multiple components may be referred to as optical assemblies. The optical beams are used to set up the ions, to perform or implement quantum algorithms, quantum applications, or quantum operations with the ions, and to read results from the ions. Control of the operations of laser, optical systems, and optical components may include dynamically changing operational parameters and/or configurations, including controlling positioning using motorized mounts or holders. When used to confine or trap ions, the trap 270 may be referred to as an ion trap. The trap 270, however, may also be used to trap neutral atoms, Rydberg atoms, and other types of atomic-based qubits. The lasers, optical systems, and optical components can be at least partially located in the optical and trap controller 220, an imaging system 230, and/or in the chamber 250.

The QIP system 200 may include the imaging system 230. The imaging system 230 may include a high-resolution imager (e.g., CCD camera) or other type of detection device (e.g., PMT) for monitoring the ions while they are being provided to the trap 270 and/or after they have been provided to the trap 270 (e.g., to read results). In an aspect, the imaging system 230 can be implemented separate from the optical and trap controller 220, however, the use of fluorescence to detect, identify, and label ions using image processing algorithms may need to be coordinated with the optical and trap controller 220.

In addition to the components described above, the QIP system 200 can include a source 260 that provides atomic species (e.g., a plume or flux of neutral atoms) to the chamber 250 having the trap 270. When atomic ions are the basis of the quantum operations, that trap 270 confines the atomic species once ionized (e.g., photoionized). The trap 270 may be part of what may be referred to as a processor or processing portion of the QIP system 200. That is, the trap 270 may be considered at the core of the processing operations of the QIP system 200 since it holds the atomic-based qubits that are used to perform or implement the quantum operations or simulations. At least a portion of the source 260 may be implemented separate from the chamber 250.

It is to be understood that the various components of the QIP system 200 described in FIG. 2 are described at a high-level for ease of understanding. Such components may include one or more sub-components, the details of which may be provided below as needed to better understand certain aspects of this disclosure.

Aspects of this disclosure may be implemented at least partially using one or more of the general controller 205, the automation and calibration controller 280, the optical and trap controller 220, and the chamber 250.

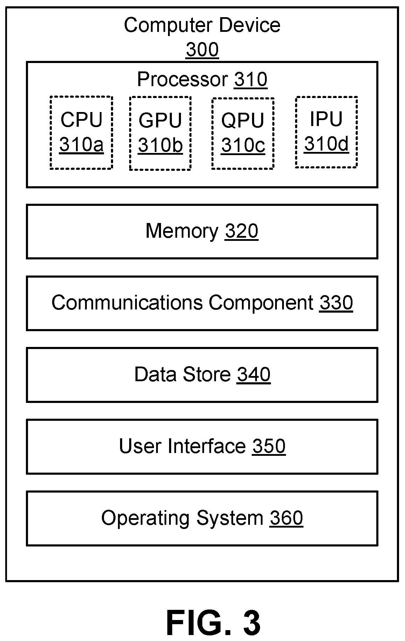

Referring now to **FIG. 3,** an example of a computer system or device 300 is shown. The computer device 300 may represent a single computing device, multiple computing devices, or a distributed computing system, for example. The computer device 300 may be configured as a quantum computer (e.g., a QIP system), a classical computer, or to perform a combination of quantum and classical computing functions, sometimes referred to as hybrid functions or operations. For example, the computer device 300 may be used to process information using quantum algorithms, classical computer data processing operations, or a combination of both. In some instances, results from one set of operations (e.g., quantum algorithms) are shared with another set of operations (e.g., classical computer data processing). A generic example of the computer device 300 implemented as a QIP system capable of performing quantum computations and simulations is, for example, the QIP system 200 shown in FIG. 2.

The computer device 300 may include a processor 310 for carrying out processing functions associated with one or more of the features described herein. The processor 310 may include a single processor, multiple set of processors, or one or more multi-core processors. Moreover, the processor 310 may be implemented as an integrated processing system and/or a distributed processing system. The processor 310 may include one or more central processing units (CPUs) 310a, one or more graphics processing units (GPUs) 310b, one or more quantum processing units (QPUs) 310c, one or more intelligence processing units (IPUs) 310d (e.g., artificial intelligence or AI processors), or a combination of some or all those types of processors. In one aspect, the processor 310 may refer to a general processor of the computer device 300, which may also include additional processors 310 to perform more specific functions (e.g., including functions to control the operation of the computer device 300). Quantum operations may be performed by the QPUs 310c. Some or all of the QPUs 310c may use atomic-based qubits, however, it is possible that different QPUs are based on different qubit technologies. One or more of the QPUs 310c may be fully connected QPUs in accordance with aspects of this disclosure.

The computer device 300 may include a memory 320 for storing instructions executable by the processor 310 to carry out operations. The memory 320 may also store data for processing by the processor 310 and/or data resulting from processing by the processor 310. In an implementation, for example, the memory 320 may correspond to a computer-readable storage medium that stores code or instructions to perform one or more functions or operations. Just like the processor 310, the memory 320 may refer to a general memory of the computer device 300, which may also include additional memories 320 to store instructions and/or data for more specific functions.

It is to be understood that the processor 310 and the memory 320 may be used in connection with different operations including but not limited to computations, calculations, simulations, controls, calibrations, system management, and other operations of the computer device 300, including any methods or processes described herein.

Further, the computer device 300 may include a communications component 330 that provides for establishing and maintaining communications with one or more parties utilizing hardware, software, and services. The communications component 330 may also be used to carry communications between components on the computer device 300, as well as between the computer device 300 and external devices, such as devices located across a communications network and/or devices serially or locally connected to computer device 300. For example, the communications component 330 may include one or more buses, and may further include transmit chain components and receive chain components associated with a transmitter and receiver, respectively, operable for interfacing with external devices. The communications component 330 may be used to receive updated information for the operation or functionality of the computer device 300.

Additionally, the computer device 300 may include a data store 340, which can be any suitable combination of hardware and/or software, which provides for mass storage of information, databases, and programs employed in connection with the operation of the computer device 300 and/or any methods or processes described herein. For example, the data store 340 may be a data repository for operating system 360 (e.g., classical OS, or quantum OS, or both). In one implementation, the data store 340 may include the memory 320. In an implementation, the processor 310 may execute the operating system 360 and/or applications or programs, and the memory 320 or the data store 340 may store them.

The computer device 300 may also include a user interface component 350 configured to receive inputs from a user of the computer device 300 and further configured to generate outputs for presentation to the user or to provide to a different system (directly or indirectly). The user interface component 350 may include one or more input devices, including but not limited to a keyboard, a number pad, a mouse, a touch-sensitive display, a digitizer, a navigation key, a function key, a microphone, a voice recognition component, any other mechanism capable of receiving an input from a user, or any combination thereof. Further, the user interface component 350 may include one or more output devices, including but not limited to a display, a speaker, a haptic feedback mechanism, a printer, any other mechanism capable of presenting an output to a user, or any combination thereof. In an implementation, the user interface component 350 may transmit and/or receive messages corresponding to the operation of the operating system 360. When the computer device 300 is implemented as part of a cloud-based infrastructure solution, the user interface component 350 may be used to allow a user of the cloud-based infrastructure solution to remotely interact with the computer device 300.

In connection with the systems described in FIGS. 1-3, a technique or method for facilitating entanglement between mixed species ions. Specifically, the present disclosure describes a method of swapping states between entanglement between mixed species qubits using non-adiabatic gates (e.g., fast gates) to speed up the transfer of quantum information. The systems described in FIGS. 2, 3, and/or 5 may be used to control various aspects of the QIP system as described below.

In some examples, the present disclosure describes a technique of interconnecting communication qubits (or network qubits) with non-communication qubits (or circuit qubits) with non-adiabatic gates. It is advantageous to use non-adiabatic gates because these types of gates are unconstrained by the trap period and motional modes and, thus, allow more gate operations per decoherence time. In particular, for photonic interconnect applications, gates that can be implemented several orders of magnitude faster than decoherence will translate to higher fidelity swap operations. In addition, non-adiabatic gates have been simulated to show the potential to speed up gates to time scales similar to or below the trap period (100s of nanoseconds).

**FIG. 4** shows an example of states (referred to as qubit states) of trapped ion 410 in an array of trapped ions of a QPU or a QIP according to an implementation of the present disclosure. The array of trapped ions can include any suitable number of trapped ions in any suitable arrangement, such as in a linear arrangement (e.g., the chain 110 in FIG. 1), in a two-dimensional (2D) arrangement, or the like. In an implementation, two energy levels of the trapped ion 410 may be allocated to be the qubit states including a "zero" qubit state (indicated by |0> or |↓>) and a "one" qubit state (indicated by a |1> or a |↑>) of a qubit. An energy difference between |0> and |1> can be indicated by a frequency $f$, for example, the energy difference is proportional to the frequency $f$.

Light at certain optical frequencies can be used to drive a single qubit gate and multi-qubit gates. The light can be focused to a beam size, for example, that is less than a distance between trapped ions, and thus individually addressing qubits.

A qubit state-motion entanglement can be generated, for example, using optical pulses. A first qubit state (e.g., |0>) can be flipped into a second qubit state (e.g., |1>) by the optical pulses while the trapped ion 410 receives a momentum kick from the optical pulses. A direction of the momentum kick can be dependent on a qubit state (e.g., |0> or |1>). A first direction of a momentum kick associated with a qubit state flip from |0> to |1> can be different from a second direction of a momentum kick associated with a qubit state flip from |1> to |0>. In an example the first direction is opposite to the second direction. The momentum kick described above can be referred to as a qubit state dependent kick. In an example, a direction (or a sign) of a momentum kick can also be affected or set by a wave-vector of an optical pulse. For example, in addition to the state dependent direction (or sign), the trapped ion 410 can also have the direction (or the sign) which is set by the wave-vector of the pulse used to drive the SDK. The two states can still receive kicks of opposite directions. In an example, the SDK has a vector direction which is equal to a sum (or a difference depending on the transition) of the wavevectors of the optical pulses driving the interaction due to the conservation of momentum, and the interactions with the optical pulses can cause the transfer of momentum.

A duration of a qubit state dependent kick can depend on (e.g., is equal to) a duration of the optical pulses. A duration of a qubit state dependent kick can be shorter than a trap period (also referred to as a trap oscillation period) $T_{TRAP}$ (e.g., 1-10 microseconds ($\mu$s)). A trap frequency $f_{TRAP}$ can be proportional to $1/T_{TRAP}$, e.g., $f_{TRAP} = 1/T_{TRAP}$. A duration of a qubit state dependent kick can be much shorter than the trap period $T_{TRAP}$, for example, a duration of a qubit state dependent kick is less than or equal to $T_{TRAP}/M$ where M is 10, 100, 1000, or the like. In an example, a qubit state dependent kick occurs in an interaction time of 1-10 nanosecond (ns) such as 2.7 ns, which is 0.2 % of the 1.27 $\mu$s trap period.

In various implementations, the two energy levels |0> and |1> can represent an effective spin ½ system, and the qubit states of the trapped ion 410 can be referred to as spin states. The "zero" qubit state |0> and the "one" qubit state |1> can be referred to as the "zero" spin state and the "one" spin state, respectively. A qubit level dependent kick can be referred to as a spin dependent kick when the qubit states are spin states.

In an example, the trapped ion is $^{171}Yb^+$, and |0> and |1> correspond to two hyperfine levels (e.g., F = 0 and F = 1) in the ground state ($^2S_{1/2}$) of $^{171}Yb^+$. The parameter F can indicate a hyperfine level. For example, |0> and |1> are defined by the $m_F = 0$ states of the $^2S_{1/2}$ hyperfine manifold of $^{171}Yb^+$: |0> is |F = 0, $m_F$ = 0> and |1> is |F = 1, $m_F$ = 0>, and the frequency $f$ (indicated by $f_{hf}$) is 12.6 giga Hertz (GHz). The parameter $m_F$ can indicate a sublevel in a hyperfine level. The trapped ion can be other suitable ions, such as barium ions.

Referring to FIG. 4, two optical beams (or optical pulses) 421-422 can counter propagate (e.g., propagate in opposite directions along an axis 401). The two optical beams 421-422 can overlap spatially. In an example, the two optical beams 421-422 arrive at the trapped ion 410 simultaneously. The two optical beams 421-422 can overlap (e.g., are synchronized) temporally. In an example, the two optical beams 421-422 partially overlap in the time domain with a temporal displacement. In an example, the optical and trap controller 220 is configured to control the two optical beams 421-422 spatially and temporally. In an implementation, transitions (or flips) between |0> and |1> are driven by stimulated Raman transitions, for example, using optical pulses. For example, in a stimulated Raman transition involving a virtual level |e>, the trapped ion 410 starts in |0>, and is driven to |1> by absorbing a first photon from the optical beam 421 and emitting a second photon into the optical beam 422, resulting in a momentum kick (e.g., an SDK) in a first direction (e.g., an upward direction). Similarly, the trapped ion 410 starts in |1>, and is driven to |0> by absorbing a photon from the optical beam 422 and emitting a photon into the optical beam 421, resulting in a momentum kick (e.g., an SDK) in a second direction (e.g., a downward direction). In an implementation, the transitions between |0> and |1> are driven by a single pulse (e.g., a microwave (MW) pulse or an MW beam with a microwave wavelength) for a resonant transition (e.g., without the virtual level or the virtual state |e>). The state dependence for a single pulse (e.g., the MW pulse) can be the same as for a Raman transition with two optical pulses. In this case using the single pulse, the absorption of the photon (e.g., |0> to |1>) of the single pulse can take on a momentum of the photon (e.g., the MW photon) (e.g., a positive kick i$\eta\hbar$k) where a stimulated emission of the photon (e.g., a MW photon) into the single pulse beam (e.g., the MW beam) (e.g., |1> to |0>) results in the momentum conservation requiring a kick in the opposite direction for the ion (e.g., a negative kick i$\eta\hbar$k). k is

the wavevector of the optical pulse. $+\eta$ quantifies the coupling strength between internal states and motional states of an ion. As described in FIG. 4, a qubit state dependent kick (e.g., a spin dependent kick) can be generated. When a duration $T_{SDK}$ of a qubit state dependent kick is much smaller than the trap period $T_{TRAP}$ (e.g., $T_{SDK} \leq T_{TRAP}/M$ where M is a pre-defined parameter such as 100), the qubit state dependent kick can occur nearly instantaneously relative to the trap period, and is referred to as an impulsive qubit state dependent kick.

A qubit state dependent kick (e.g., a spin dependent kick) can have the following action on a general state of a trapped ion (e.g., the trapped ion 410).

$$|0\rangle|\alpha\rangle \rightarrow e^{i\eta Re[\alpha]}|1\rangle|\alpha+i\eta\rangle \qquad \text{Eq. (1)}$$

$$|1\rangle|\alpha\rangle \rightarrow e^{-i\eta Re[\alpha]}|0\rangle|\alpha-i\eta\rangle \qquad \text{Eq. (2)}$$

where a general state $|i\rangle|\alpha\rangle$ represents a qubit state (e.g., a spin state) $|i\rangle$ (i being 0 or 1) and a motional state (or a coherent motional state) $|\alpha\rangle$. Referring to Eq. (1), for example, in an SDK (e.g., a spin dependent kick), the spin state $|0\rangle$ is flipped to the spin state $|1\rangle$, a spin dependent phase term (also referred to as a spin dependent phase) $e^{i\eta Re[\alpha]}$ is imparted by the SDK, and a coherent motional state $|\alpha\rangle$ is changed to $|\alpha+i\eta\rangle$. Referring to Eq. (2), for example, in an SDK, the spin state $|1\rangle$ is flipped to the spin state $|0\rangle$, a spin dependent phase term $e^{-i\eta Re[\alpha]}$ is imparted by the SDK, and a coherent motional state $|\alpha\rangle$ is changed to $|\alpha-i\eta\rangle$. In an SDK described above, the spin states can receive respective displacements in phase space of $\pm i\eta$. The parameter $\eta$ can indicate a size (or a magnitude) of the qubit state dependent kick (e.g., an SDK). In an example, $\eta$ indicates a coupling strength between internal states (e.g., spin states $|0\rangle$ and $|1\rangle$) and motional states (e.g., $|\alpha\rangle$) of an ion (e.g., the trapped ion 410). In an example, $\eta$ is the Lamb-Dicke parameter.

Qubit state dependent kicks (e.g., spin dependent kicks) can allow fast two ion entangling gates that can operate faster than respective trap period(s) (e.g., $T_{TRAP}$) of trapped ions. The two ion entangling gates are made possible by the spin dependent phase term $e^{\pm i\eta Re[\alpha]}$ imparted by the qubit state dependent kicks. The spin dependent phase term $e^{\pm i\eta Re[\alpha]}$ can be accumulated by the state dependent dynamics that result from the SDKs.

In some implementations, however, entangling gates implemented using SDKs (e.g., spin dependent kicks) alone face a number of problems. 1) For example, an SDK size $\eta$ is relatively small, and thus many kicks or a large number of kicks are to be combined to achieve a gate. A kick rate (or an SDK rate) can be limited by a laser repetition rate, and thus placing a basic limit on a gate speed. 2) In an example, the fidelity of a single SDK must be unrealistically high in order for numerous SDKs to yield a single high fidelity gate. Spontaneous emission can place a limit on the highest achievable fidelity of a single SDK. 3) The SDK is its own inverse, for example, a second SDK after a first SDK inverts the action of the first SDK, making it difficult to combine the effects (e.g., to accumulate a spin dependent phase) of multiple SDKs (e.g., the first SDK and the second SDK). On the other hand, reversing a direction of an SDK while maintaining a fast gate operation may be non-trivial and may be challenging. 4) The SDKs are discretized, and thus setting the phase to create a maximally entangling gate may be challenging.

In general, a trapping potential of an ion trap can be manipulated. The manipulation of the trapping potential can include any suitable manipulation of a shape of the trapping potential which can generate any suitable equilibrium positions of respective ions in the ion trap. The trap frequency can also be changed. The trap frequency can be increased, and thus decreasing the trapping period. There can be arbitrarily many different equilibrium displacements. The manipulation of the trapping potential can include changing from one trapping potential to another trapping potential. The trapping potential manipulation can be achieved in any suitable duration $T_p$. The duration $T_p$ can be larger or equal to the trapping period $T_{TRAP}$. The duration $T_p$ of the trapping potential manipulation can be less than the trapping period $T_{TRAP}$. A manipulation of the trapping potential can be referred to as a fast manipulation of the trapping potential, for example, if the duration $T_p$ is much less than the trapping period $T_{TRAP}$, such as $T_p \leq T_{TRAP}/K$ where K can be a pre-defined parameter such as 10 or 100. In an implementation, a fast manipulation of the trapping potential causes a nearly instantaneously shift or displacement of a position of the trapped ion well, and thus sending the trapped ion into a large and well defined coherent motional state.

According to an implementation of the disclosure, ultrafast gates can be implemented by a method that combines a manipulation (e.g., a fast manipulation) of the trapping potential with qubit state dependent kicks (e.g., spin dependent kicks). According to an exemplary aspect, an "ultrafast" gate can refer to a gate implemented within a gate duration $T_{GATE}$ that is less than $T_{TRAP}$ or comparable to $T_{TRAP}$. In an example, $T_{GATE}$ of an ultrafast gate is less than $\beta T_{TRAP}$ where the parameter $\beta$ can be pre-defined, such as $\beta$ is 1.5. The combination of the manipulation (e.g., the fast manipulation) of the trapping potential with the qubit state dependent kicks can resolve the problems described above, and make ultrafast gates feasible.

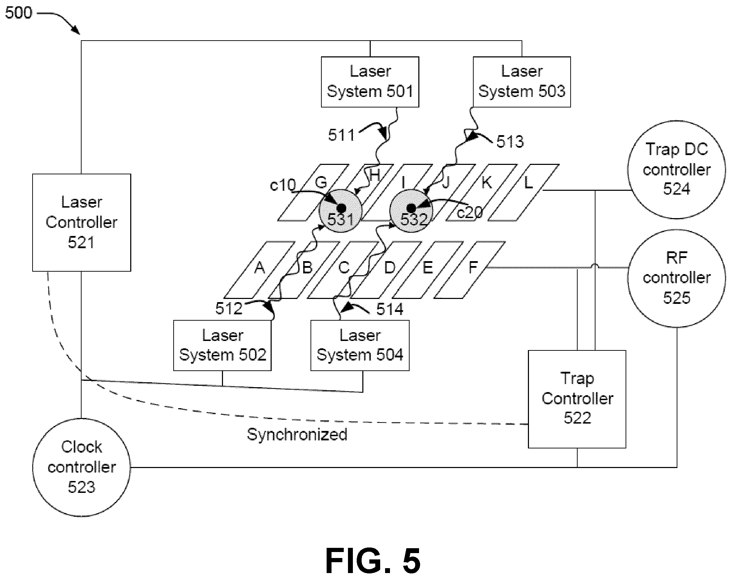

**FIG. 5** shows an exemplary QIP system 500 according to an implementation of this disclosure. The QIP system 500 can be a variation of the QIP system 200, and can include any or all components in the QIP system 200. Further, the QIP system 500 can be configured to combine and control a manipulation (e.g., a fast manipulation) of a trapping potential of an ion trap with qubit state dependent kicks (e.g., spin dependent kicks) to trapped ions such as trapped ions 531-532 in the ion trap. The QIP system 500 can include one or more trapped ions, such as an array of trapped ions including the trapped ions 531-532 (e.g., $^{171}Yb^+$). The description of the trapped ion 410 can be applied to each of the trapped ions 531-532. Qubits associated with the trapped ions 531-532 can be entangled, for example, a qubit state of the trapped ion 531 can be dependent on a qubit state of the trapped ion 532.

The QIP system 500 can include the ion trap (e.g., the trap described in FIG. 1 or the trap 270 in FIG. 2), an optical system (e.g., partially located in the optical and trap controller 220 and/or in the chamber 250 in FIG. 2), and a controller (e.g., the optical and trap controller 220 in FIG. 2). The optical system can include laser systems 501-504. The controller can include a laser controller 521 configured to control operations of the laser systems 501-504 lasers and optical systems that provide optical beams that interact with the atoms or ions in the ion trap, a trap controller 522 configured to control operations of the ion trap, and a clock controller 523.

The ion trap can be formed using any suitable method. In an implementation, the ion trap is an RF Paul trap formed by suitably arranging electrodes and by providing suitable voltages to control the electrodes. A trapping potential of the ion trap can be manipulated by manipulating an electrode configuration and/or by manipulating voltages applied to the electrodes. Multiple electrodes (e.g., electrodes A-L) can be arranged in a suitable configuration. In an example, the trap controller 522 is configured to control a trap DC controller 524 and an RF controller (also referred to as a resonant RF controller) 525. DC voltages can be applied to a subset of the multiple electrodes (e.g., the electrodes G-L) via the trap DC controller 524, and RF voltages can be applied to another subset of the multiple electrodes (e.g., the electrodes A-F) via the RF controller 525. Alternatively, the trap controller 522 is configured to control the DC voltages and the RF voltages at the electrodes A-L directly.

The optical system can be configured to provide suitable optical beams to perform qubit state dependent kicks (e.g., spin dependent kicks) to the trapped ions 531-532. The optical system (e.g., including the laser systems 501-504) can provide spatial and temporal control to the optical beams. In an implementation, the laser systems 501-502 are configured to generate optical beams 511-512 that counter propagate and arrive at the trapped ion 531. The optical beams 511-512 can overlap (e.g., are synchronized) temporally. In an example, the optical beams 511-512 partially overlap in the time domain with a temporal displacement. The descriptions for the optical beams 421-422 can be applied to the optical beams 511-512. The optical beams 511-512 can cause a qubit state dependent kick (e.g., an spin dependent kick), for example, by driving a stimulated Raman transition between two qubit states |0> and |1> of the trapped ion 531, such as described in FIG. 4. Similarly, the laser systems 503-504 are configured to generate optical beams 513-514 that counter propagate and arrive at the trapped ion 532. The optical beams 513-514 can overlap (e.g., are synchronized) temporally. In an example, the optical beams 513-514 partially overlap in the time domain with a temporal displacement. The descriptions for the optical beams 421-422 can be applied to the optical beams 513-514. The optical beams 513-514 can cause a qubit state dependent kick (e.g., a spin dependent kick), for example, by driving a stimulated Raman transition between two qubit states |0> and |1> of the trapped ion 532, such as described in FIG. 4.

According to an implementation of the disclosure, the controller (e.g., the trap controller 522) is configured to manipulate the trapping potential of the ion trap in a relatively short duration $T_p$, for example, the manipulation of the trapping potential is a fast manipulation of the trapping potential as described above. For example, the duration $T_p$ is much less than the trapping period $T_{TRAP}$, such as $T_p \leq T_{TRAP}/K$. In an implementation, the fast manipulation of the trapping potential change (e.g., switch) a first trapping potential of the ion trap to a second trapping potential of the ion trap. Referring to FIG. 5, the first trapping potential can have a first equilibrium position c10 for the trapped ion 531 and a first equilibrium position c20 for the trapped ion 532, and the second trapping potential can have a second equilibrium position c11 for the trapped ion 531 and a second equilibrium position c21 for the trapped ion 532. In an example, the first equilibrium positions c10 and c20 are located at local minima of the first trapping potential, and the second equilibrium positions c11-c21 re located at local minima of the second trapping potential.

In an example, the switching from the first trapping potential to the second trapping potential can cause a nearly instantaneously (e.g., with the duration $T_p$) shift or displacement of equilibrium positions of the trapping potential, and thus a shift of the equilibrium positions of the trapping potential from the first equilibrium position c10 and c20 of the trapped ions 531-532 to the second equilibrium positions c11 and c21, respectively. The trapped ion 531 and/or the trapped ion 532 can be sent into large coherent motional state(s) $|\alpha>$ with the displacements of the respective equilibrium positions of the trapping potential.

Any suitable switching method can be applied to control electrode(s) in the electrodes A-L to implement the manipulation (e.g., the fast manipulation) of the trapping potential of the ion trap. In an example, voltages applied to a subset of the electrodes (e.g., including B, H, D, and J) are manipulated (e.g., switched) within the duration $T_p$ (e.g., 1-10 ns), for example, to switch the trapping potential (e.g., from one trapping potential to another trapping potential).

According to an implementation of the disclosure, the laser systems 501-502 can be configured to implement a qubit state dependent kick (e.g., a spin dependent kick) to the trapped ion 531 when the trapped ion 531 is associated with the first trapping potential or the second trapping potential . The laser systems 503-504 can be configured to implement a qubit state dependent kick (e.g., a spin dependent kick) to the trapped ion 532 when the trapped ion 532 is associated with the first trapping potential or the second trapping potential. In an example, the optical beams 511-512 arrive at the trapped ion 531 (e.g., located at c10), for example, the optical beams 511-512 are focused onto an area that is centered around c10. The laser systems 503-504 can be configured to generate optical beams 513-514 that arrive at the trapped ion 532 (e.g., located at c20), for example, the optical beams 513-514 are focused onto an area that is centered around c20. The laser systems 501-504 can be configured to control directions of the optical beams 511-514 and/or positions of the optical beams 511-514. In an example, the optical beams 511-514 can track the positions of the trapped ions 531-532, respectively.

The laser systems 501-504 can be implemented using any suitable components. The laser systems 501-504 can be configured to generate one or more pulse pairs, such as a train of pulse pairs. Each of the pulse pairs can include two counterpropagating optical pulses such as described with reference the optical beams 421-422, 511-512, and/or 513-514.

The laser systems 503-504 can have components that are different from the laser systems 501-502, for example, the laser systems 501-502 are separate from the laser systems 503-504 such as shown in FIG. 5.

In an implementation, the laser systems 501-502 is implemented using a single laser system (or a single optical system) including a single laser (e.g., a mode-locked 355 nm laser), Mach-Zehnder interferometer(s), a pulse picker, acoustic optical modulators (AOMs), and/or the like. Two output beams from the respective AOMs can be the optical beams 511-512. Similarly, the laser systems 503-504 can be implemented using a mode-locked laser, a pulse picker, stacked Mach-Zehnder interferometers, and two AOMs. Two output beams from the respective AOMs can be the optical beams 513-514. Alternatively, the optical beams 511-512 from the laser systems 501-502 can be manipulated to generate the optical beams 513-514 by controlling components in the laser systems 511-512. In an example, a single laser system (or a single optical system) is used to generate the optical beams 511-514.

Functions of the controller can be implemented using any suitable hardware, software, and the like. The laser controller 521, the trap controller 522, and/or the clock controller 523 can be separate controllers or can be integrated into a single controller (e.g., the optical and trap controller 220 described in FIG. 2).

In an example, the controller described with reference to FIG. 5 can be configured to further perform functions of the optical and trap controller 220 described in FIG. 2. Alternatively, the QIP system 500 can further includes an optical and trap controller that is similar or identical to the optical and trap controller 220 described in FIG. 2.

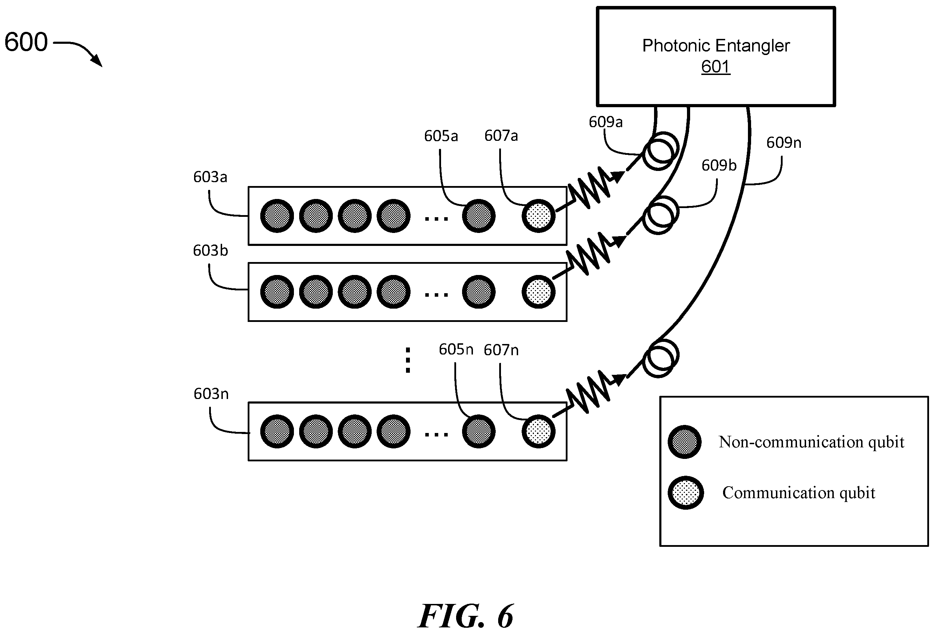

**FIG. 6** illustrates an example of a photonic interconnect architecture in accordance with aspects of this disclosure. As shown in example 600 of FIG. 6, the present disclosure describes an example of a multispecies ion trap network. Specifically, the present disclosure utilizes a photonic entangler 601 that interconnects a plurality of single QPUs 603a, 603b, 603n via optical fibers 609a, 609b, 609n.

A single node of the network can be realized with a chain of trapped ions, where local entangling gate operations use external control fields that couple the qubit states through their collective motion. Edges of the networks may then be implemented by photonic entangling operations between select communication qubits in separate nodes. However, the photonic interface for the communication qubits must not disturb the spectator memory qubits, as even a single resonant photon can destroy the quantum memory. Accordingly, isolation may be accomplished by using two different species of ions: one for communicating with other nodes (e.g., communication qubits) and one for local processing and/or memory (e.g., non-communication qubits).

In some examples, the communication qubits are $^{138}Ba^+$ qubits. In some examples, the communication qubits are $^{88}Sr^+$ qubits. In some example, the non-communication qubits may be memory qubits such as $^{171}Yb^+$ memory qubits. In some example, the non-communication qubits may be memory qubits such as $^{133}Ba^+$ memory qubits.

Local Coulomb interactions may mediate transfer of this entanglement to nearby non-communication qubits (e.g., memory qubits or computation qubits) as well as quantum logic gates within the node. The disparate electronic transition frequencies of the two species provides the necessary isolation to protect the non-communication qubits from resonant processes in the communication interface. As mentioned above, on each of the QPUs, the interconnect qubits 607a are entangled with computational qubits 605a with non-adiabatic (e.g., fast) gates.

In some aspects, the photonic entangler 601 is a reconfigurable photonic entangler.

Photon mediated entanglement between two ions is accomplished with each of the ions encoding a qubit in two spin states (e.g., $|0\rangle$, $|1\rangle$), which can be coupled via photons to an excited state $|e\rangle$. Entanglement between the two ions proceeds by initial ion-photon entanglement in each ion of a pair.

In some aspects, the photonic entangler 601 would include a $N \times N$ photonic switch. The photonic switch is used to select the pair of ions we want to entangle. As an example, referring back to FIG. 6, N corresponds to the number of different QPUs connected to the photonic entangler 601.

In some aspects, the photonic entangler 601 would include a N/2 beam splitters. The beam splitters are used to combine the photons from the selected pair of QPUs. This is the first step towards heralded transfer of entanglement of the two ions. As an example, referring back to FIG. 6, N corresponds to the number of different QPUs connected to the photonic entangler 601.

In some aspects, the photonic entangler 601 would include a Bell state analyzer. In the Bell state analyzer, certain detection patterns project the ions into an entangled states (e.g., generally one of the Bell States) conditioned on the measurement result.

The heralded transfer of entanglement for two ions happens in the beam splitter and the Bell state analyzer via the erasure of which-path information comes (through photon interference) and photon detection.

Thus, by using photons entangled with their parent atoms, any pair of communication qubits in different nodes can be entangled through a reconfigurable photonic entangler.

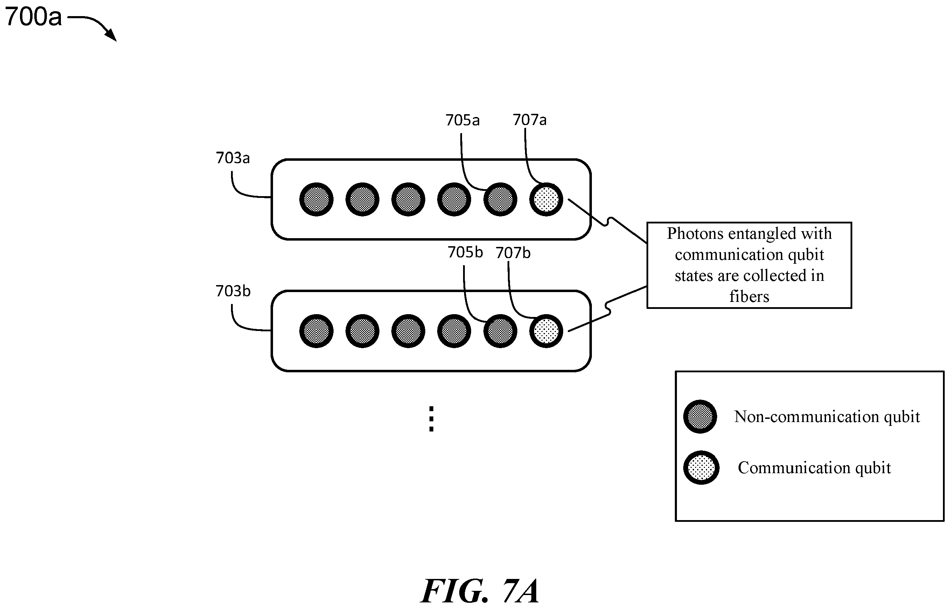

**FIGS. 7A-7C** illustrate an example of a photonic interconnect protocol on a QIP system using a photonic entangler and single QPUs in accordance with aspects of this disclosure. Specifically, examples 700a-700c describes a protocol to use non-adiabatic gates to speed up the transfer of quantum information from communication qubits to non-communication qubits.

As shown in example 700a of FIG. 7A, two remote ions are entangled using the photonic interconnects. Communication (or interconnect) qubits are coupled to optical fibers. Using ion-photon entanglement, any pair of communication qubits in different QPUs can be entangled through a reconfigurable photonic entangler. Specifically, the photons entangled with interconnect qubit states are collected in optical fibers.

In order to achieve photon mediated entanglement between two ions, there may be four different photonic variables to produce indistinguishable photons from each ion: number, time-bin, polarization, and frequency. Only the scheme using polarization may require Zeeman qubits. In particular, the polarization method has been demonstrated with the highest rate and fidelities and has the most availability of photonic components alternatives for implementation.

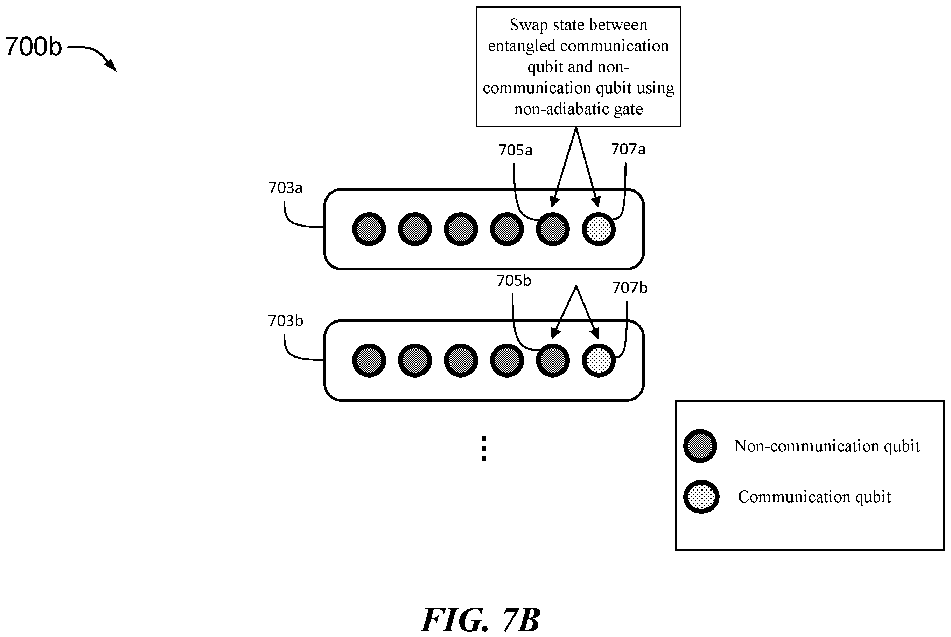

As shown in example 700b of FIG. 7B, a local gate may be used to move the communication qubit state to a non-communication qubit (e.g., a memory qubit). Specifically, example 700b describes swapping the state between the entangled communication qubit and a memory qubit using non-adiabatic gates.

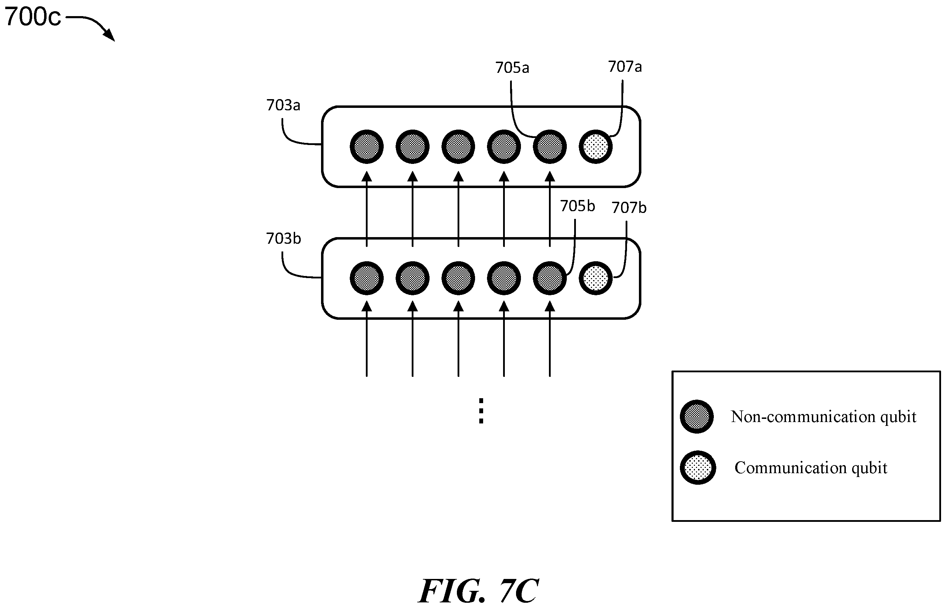

As shown in example 700c of FIG. 7C, quantum computation proceeds by using the memory qubit as a resource for gates between remote quantum processing units. Specifically, example 700c describes running quantum computations in every QPU.

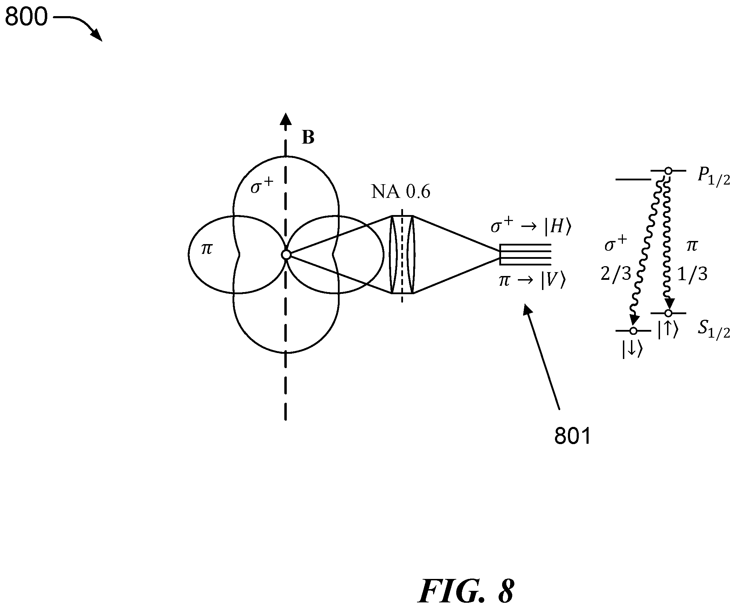

**FIG. 8** illustrates interconnect qubit states and photon polarization states in accordance with aspects of this disclosure.

As shown in example 800 of FIG. 8, two possible polarization states are collected from the ion's emitted photons for $^{88}Sr^+$. Specifically, example 800 of FIG. 8 shows an intensity distribution of the light field for $\sigma^+$ and $\pi$ decay channels, relative to the quantization axis set by the static magnetic field B, and the branching fractions for each decay due to atomic selection rules. At the fiber input face, photons from $\sigma^+(\pi)$ decay map to the *H(V)* fiber polarization mode.

At 801, photons may enter single-mode fiber. This helps map to horizontal and vertical states, filters spatial distribution to mode-match photons, and prevents crosstalk from steep angle-of-incidence. Light of H or V orthogonal polarization is routed to a Bell state analyzer in the Photonic Entangler 601 to measure the photon state.

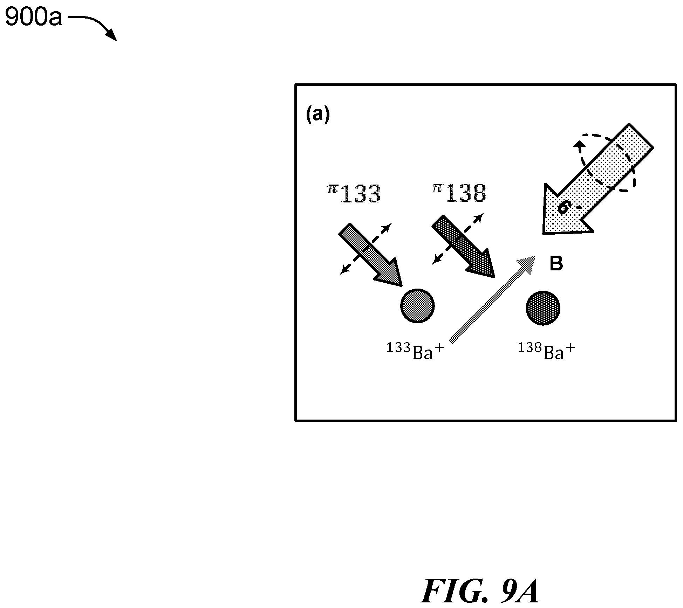

**FIGS. 9A-C** illustrates an exemplary implementation of SDKs in a two-ion chain of different atomic masses in accordance with aspects of this disclosure. Specifically, FIGS. 9A-C depict an SDK implementation in a dual-isotope $^{133}Ba^+$ and $^{138}Ba^+$ chain using beams derived from a single Raman laser, as shown in example 900a. In this configuration, the network qubits and memory qubits are encoded in the $6_{s1/2}$ ground-state manifold of $^{138}Ba+$ and $^{133}Ba+$, respectively, as shown in example 900b.

FIG. 9A shows the schematic configuration of Raman beam orientations and polarizations with respect to the trapped dual-ion chain. A magnetic field is applied along a defined axis to lift Zeeman degeneracy. The Raman beams are composed of circularly-polarized $\sigma^-$ light that illuminates both ions and two linearly-polarized $\pi$ beams (e.g., $\pi_{133}$ and $\pi_{138}$). The $\pi_{133}$ is tuned and directed to selectively couple to $^{133}Ba+$, while $\pi_{138}$ is used addressing the $^{138}Ba+$ ion.

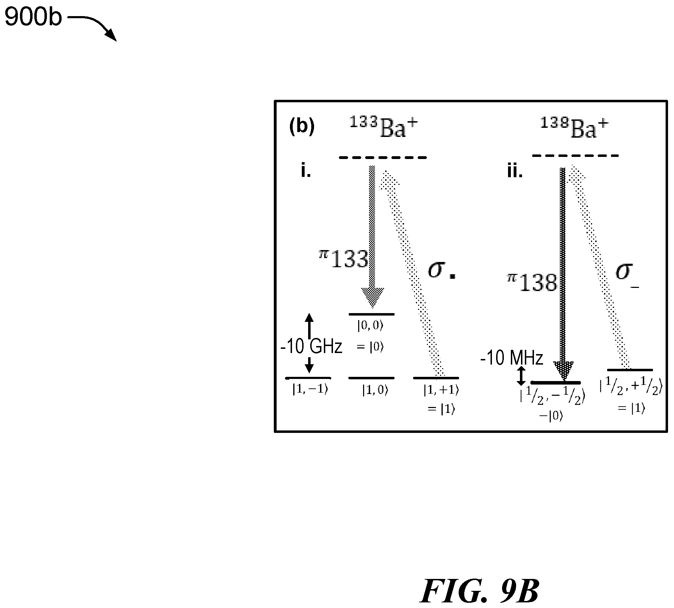

FIG. 9B shows two subfigures showing relevant energy level diagrams. Subfigure (b)(i) illustrates the relevant energy levels within the $6_{s1/2}$ ground state manifold of $^{133}Ba+$, identifying hyperfine qubit states and allowed Raman transitions suitable for high-fidelity manipulation of the memory qubit. Subfigure (b)(ii) similarly illustrates the Zeeman energy sub-levels and Raman transition pathways for the $^{138}Ba+$ network qubit, which lacks hyperfine structure, enabling selective SDK application for each qubit independently.

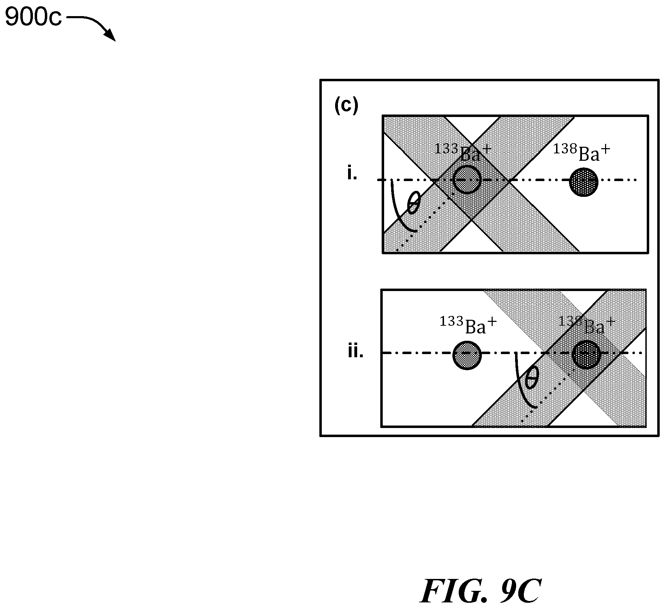

FIG. 9C depicts a timing diagram demonstrating asynchronous SDK application on the respective ion isotope. Subfigure c(i) shows the application of a nanosecond pulse sequence to $^{133}Ba+$ using $\pi_{133}$ and $\sigma^-$ beams to realize a Raman-induced SDK. Subfigure c(ii) illustrates a single-pulse SDK on $^{138}Ba+$, performed via the $\pi_{138}$ and $\sigma^-$ beams. The asynchronous SDKs allow for flexible timing control without comprising gate fidelity, enabling efficient composite two-qubit gate construction across distinct ion species or isotopes.

In one implementation, ultrafast spin-motional entanglement of the $^{133}Ba+$ and $^{138}Ba+$ qubit is achieved using a circularly polarized $\sigma^-$ beam (shared between ions) configured to illuminate both $^{133}Ba+$ and $^{138}Ba+$, in combination with a linearly polarized $\pi_{133}$ beam that is spatially and spectrally configured to address only the $^{133}Ba+$ ion. The $^{133}Ba+$ ion exhibits a hyperfine ground-state splitting of approximately 9.926 GHz, enabling the $\sigma^-$ and $\pi_{133}$ beams to drive the $|0, 0\rangle \rightarrow |1, +1\rangle$ transition with high selectivity. This configuration suppresses off-resonant excitation of the $|1,-1\rangle$ and $|1,0\rangle$ hyperfine states and prevents unwanted excitation of the $^{138}Ba+$ ion, which lacks hyperfine structure. High-fidelity SDKs may be

implemented on the $^{133}$Ba+ memory qubit using pulse sequences comprising approximately ten ultrafast laser pulses, each with a duration on the nanosecond scale, generated by the single mode-locked laser operating at a repetition rate of several gigahertz.

In another implementation, SDKs are applied to the $^{138}$Ba+ network qubit using a series of ultrafast optical pulses (on the order of ~10 picoseconds) derived from the $\pi_{138}$ beams, in conjunction with the same $\sigma^-$ beam. Given the Zeeman splitting in $^{138}$Ba+ qubit (~10 MHz) is much smaller than the pulse bandwidth (~10 GHz), single ultrafast pulses are sufficient to induce SDKs. These pulses may be retroreflected with a calibrated delay to realize the desired unitary evolution.

Due to the fast-gate protocol requiring only nanosecond-level timing control, SDKs on the $^{138}$Ba+ qubit may be applied asynchronously with respect to those on $^{133}$Ba+, without significantly impacting gate fidelity, as shown in example 900c. This temporal flexibility eases synchronization constraints and simplifies experimental implementation. In some implementations, each $\pi$-pulse may be subdivided into a sequence of lower-intensity nanosecond pulses to reduce peak laser power requirements. Alternatively, composite pulse sequences may be employed to improve robustness against technical noise and systematic errors.

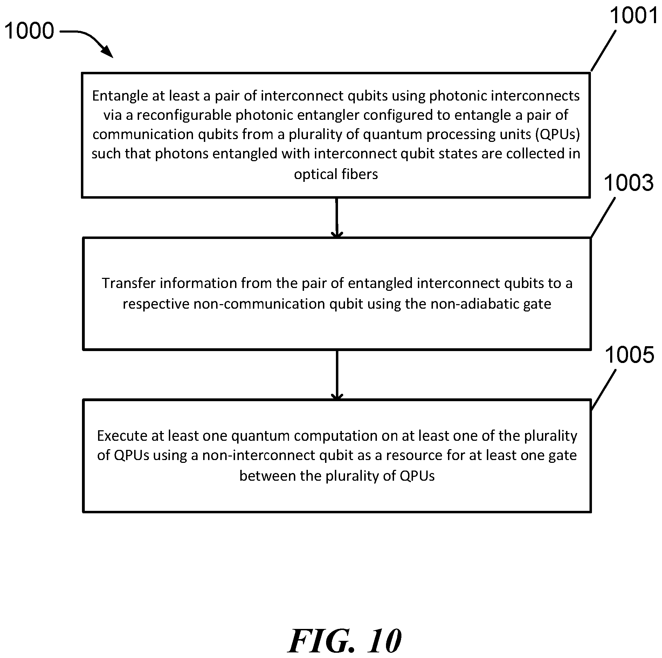

**FIG. 10** illustrates a flow chart describing a method of exchanging quantum information between different types of qubits using a QIP system. In general, it is noted that parts of the exemplary method 900 can be implemented using the components and systems described herein, especially with request to QIP system 200 and general controller 205 of FIG. 2 as described above and computing device 1102 of FIG. 11 as described below. The steps and algorithms described in relation to method 1000 may be executed by processor 310 using algorithms components 210. Specifically, the method 1000 in FIG. 10 describes an overall flow process of transferring information from communication interface ion qubits to memory or computational qubits using non-adiabatic gates.

At step 1001, the method 1000 may include entangling at least a pair of interconnect qubits using photonic interconnects via a reconfigurable photonic entangler configured to entangle a pair of communication qubits from a plurality of quantum processing units (QPUs) such that photons entangled with interconnect qubit states are collected in optical fibers. Each QPU comprises at least a plurality of non-interconnect qubits, an interconnect qubit coupled to the reconfigurable photonic entangler with an optical fiber, and a non-adiabatic gate coupling the interconnect qubit to the plurality of non-interconnect qubits. In some examples, the non-interconnect qubit may correspond to a computational qubit. In some examples, the non-interconnect qubit may correspond to a memory qubit. In some examples, the non-interconnect qubits may be Zeeman qubits. In some examples, the non-interconnect qubits may be of a different ion species or isotope used as an ancilla qubit in a quantum error correction (QEC) protocol.

As an example, referring back to FIG. 6, a single QPU contains at least a plurality of non-communication qubits 605a, a communication qubit 607a coupled to a photonic entangler 601 with an optical fiber 609a, and a non-adiabatic gate coupling the communication qubit 607a to the non-communication qubit 605a. As another example, referring back to FIG. 7A, example 700a shows photons entangled with interconnect qubit state collected in optical fibers.

In some examples, the non-interconnect qubit has at least two orders of magnitude longer decoherence time than that of the interconnect qubit. Non-interconnect qubits are useful for memory or computation for their long decoherence times.

At step 1003, the method 1000 may include transferring information from the pair of entangled interconnect qubits to a respective circuit or memory qubit using the non-adiabatic gate. In some example, the method 1000 further includes transferring information from the pair of entangled network or interconnect qubits by swapping states between one of the entangled interconnect qubits and a respective non-interconnect qubit. As an example, referring back to FIG. 7B, example 700b shows transferring information from the communication qubit 707a, 707b to the non-communication qubit 705a, 705b.

At step 1005, the method 1000 may include executing at least one quantum computation on at least one of the plurality of QPUs using a non-interconnect qubit as a resource for at least one gate between the plurality of QPUs. In some examples, the method 1000 may further include executing quantum computations on each QPUs using the non-interconnect qubit as a resource for gates between the plurality of QPUs. As an example, referring back to FIG. 7C, example 700c also shows running quantum computations in each QPU 703a, 703b.

In some examples, the reconfigurable photonic entangler includes a photonic switch configured to control optical signals. The photonic switch is configured to select a pair of ions that are to be entangled.

In some examples, the reconfigurable photonic entangler includes a plurality of beam splitters configured to split incident light into separate beams. The beam splitters are used to combine the photons from the selected pair of QPUs.

In some examples, the reconfigurable photonic entangler includes a Bell state analyzer configured to detect Bell states. In the Bell state analyzer, certain detection patterns project the ions into an entangled state conditioned on the measurement results. Accordingly, the heralded transfer of entanglement for two ions happens in the beam splitter and the Bell state analyzer via the erasure of which-path information comes through photon interference and photon detection.

In some examples, the method 1000 may include configuring the non-adiabatic gates to use internal states (e.g., spin states) to move ions. Non-adiabatic gates where ions motions are manipulated state dependently at timescales faster than the trap period.

A trapped ion (e.g., the trapped ion 531) in an ion trap can be in a first trapping potential. The trapped ion can be in a first spin state (e.g., |0>) and a first motional state (or a first coherent motional state $|\alpha\rangle$).

In some examples, the method 1000 may further include performing state dependent kicks (SDK) to a first trapped ion or to a pair of trapped ions sequentially or simultaneously in an ion trap having a first trapping potential, the trapped ions being in a spin state and a first motional state prior to the first SDK and changing a first trapping potential of the ion trap to a second trapping potential of the ion trap. A duration of the first SDK can be less than a trap period $T_{TRAP}$ of the trapped ion. The method 1000 may further include changing a first trapping potential of the ion trap to a second trapping potential of the ion trap. A first center position c0 of the first trapping potential of the ion trap can be changed (or displaced) to a second center position c1 of the second trapping potential of the ion trap. A duration of changing the first trapping potential to the second trapping potential can be less than the trap period $T_{TRAP}$. In an example, the first trapping potential is changed by manipulating voltages at electrodes of the ion trap.

It is understood that the method illustrated by FIG. 10 is exemplary in nature and that the steps described herein may be combined or modified to generate alternative implementations.

This disclosure provides a technique to transfer quantum information between any entangled mixed species ions by using non-adiabatic gates to speed up the transfer of quantum information. Specifically, the present disclosure may swap quantum information by taking advantage of non-adiabatic gates in multi-species or multi-isotope ion chains. In addition, non-adiabatic gates are unconstrained by the trap period and motional modes to allow more gate operations per decoherence time. For example, given that Zeeman qubits decohere in millisecond timescales, the faster quantum information is removed from the Zeeman qubits, the higher the fidelity of the information swap operation.

FIG. 11 illustrates an example of a QIP system in accordance with aspects of this disclosure. The example QIP system 1100 shown in FIG. 11 includes a control subsystem 1110 that can receive a quantum program 1104 from a computing device 1102 that is remotely located relative to the example QIP system 1100 and is functionally coupled (e.g., communicatively coupled) to the control subsystem 1110. The computing device 1102 can send data defining the quantum program 1104 to control subsystem 1110 for execution in quantum hardware 1120, determining qubit placement in the quantum circuit, as described herein. As is indicated by dashed lines, the computing device 1102 can be external to the example QIP system 1100. For example, the computing device 1102 can be a user device (e.g., a classical computer) of an end-user of the QIP system 1100. The control subsystem 1110 can retain the quantum program 604 in one or more memory devices 1112. The quantum program 1104 corresponds to a defined quantum computation. The defined quantum computation can be an n-qubit computation, for example. The quantum program 1104 can include a quantum circuit (and, in some cases, sub-circuits, such as the entanglement component, communication component, and execution component) representing a quantum algorithm associated with the quantum computation. Examples of the quantum algorithm include a variational quantum algorithm, a machine-learning algorithm, a Fourier transform algorithm, or the like.

The control subsystem 1110 can be functionally coupled to quantum hardware 1120 via multiple links 1114 that permits the exchange of data and/or controls signal between the control subsystem 1110 and the quantum hardware 1120. The quantum hardware 1120 can embody or can include one or more quantum computers. In some cases, the quantum hardware 1120 embodies a cloud-based quantum computer. In other cases, the quantum hardware 1120 embodies, or includes a local quantum computer. Regardless of its spatial footprint, the quantum hardware 1120 includes multiple qubits 1130 arranged in a particular layout. Each qubit of the qubits 1130 (including the target and ancilla qubits described herein) can be coupled to an environment and/or to one another. Such coupling(s) decoheres and relaxes quantum information contained in the qubit. Thus, the quantum hardware 1120 can be noisy. The type of the multiple links can be based on the type of qubits 1130 used by the quantum hardware 1120 for computation. In some cases, the multiple links 1114 can include wireline links or optical links, or a combination of both. In other cases, the multiple links 1114 can include microwave resonator devices or microwave transmission lines, or a combination of both.

The qubits 1130 can include atomic qubits assembled in an atom-trap. Thus, the atomic qubits can be referred to as trapped-atom qubits. In some cases, each one of the atomic qubits can be a neutral atom. In other cases, each one of the atomic qubits can be an ion, such as an Ytterbium ion, a calcium ion, or similar ions. The atomic-qubits in such cases can be confined within an ion-trap (e.g., the trap 270 (FIG. 2) and can be assembled in a linear arrangement (such as the linear crystal or chain 110 (FIG. 1)). In other implementations, the qubits 1130 can include solid-state devices of one of several types. Such devices can be embodied in, for example, Josephson junction devices, semiconductor quantum-dots, or defects in a semiconductor material (such as vacancies in Si and Ge, or nitrogen-vacancy centers in diamond).

The control subsystem 1110 can cause the quantum hardware 1120 to execute the quantum circuit and/or sub-circuits as described herein. In response, the control subsystem 1110 can receive measurement data 1118 indicative of computation outputs that includes the output of the at least one quantum computation, for example. Because the quantum computation can be performed in two or more qubits, a measurement outcome can be represented as a bitstring representing a particular target output state given a particular set of qubits involved in a quantum computation. The control subsystem 1110 can supply at least a portion of the measurement data 1118 to components of the control subsystem 1110 and/or other subsystems (e.g., post-processing subsystem 1150).

The control subsystem 1110 also can be functionally coupled to a post-processing subsystem 1150 via a communication architecture 1140. The communication architecture 1140 can include wirelines links, wireless links, network devices (such as gateway devices, servers, and the like), or a combination thereof. The post-processing subsystem 1150 can apply one or several post-processing techniques to measurement data 1118 received from the quantum hardware 1120. By applying such techniques, the post-processing subsystem 1150 can generate a result 1154 of a quantum computation executed by the quantum hardware. The post-processing subsystem 1150 can send the result 1154 (or data indicative of the result 1154) to the computing device 1102 and/or other computing device(s) 1158. The post-processing subsystem 1150 also can cause the computing device 1102 to present the result 1154 in a particular way. For example, the post-processing subsystem 1150 can direct the computing device 1102 to present a user interface including the result 1154.

Furthermore, the computing devices (1104, 1154, 1158) in FIG. 11 correspond to classical or hybrid classical-quantum controllers that orchestrate the optical system, the reconfigurable photonic entangler, and the ion trap, as recited in the claim. These controllers ensure precise execution of photon-pair generation, optical switching, and trap potential modulation-each required for enabling entanglement, teleportation via non-adiabatic gates, and the utilization of non-communication qubits in cross-QPU gate operations. Thus, FIG. 11, in conjunction with FIGS. 6 and 7A-7C, demonstrates the practical implementation of the full QIP pipeline, reinforcing the interdependence of quantum hardware, photonic entanglement infrastructure, and control systems in enabling distributed quantum computing.

In the interest of clarity, not all of the routine features of the aspects are disclosed herein. It would be appreciated that in the development of any actual implementation of the present disclosure, numerous implementation-specific decisions must be made in order to achieve the developer's specific goals, and these specific goals will vary for different implementations and different developers. It is understood that such a development effort might be complex and time-consuming but would nevertheless be a routine undertaking of engineering for those of ordinary skill in the art, having the benefit of this disclosure.

In the interest of clarity, not all of the routine features of the aspects are disclosed herein. It would be appreciated that in the development of any actual implementation of the present disclosure, numerous implementation-specific decisions must be made in order to achieve the developer's specific goals, and these specific goals will vary for different implementations and different developers. It is understood that such a development effort might be complex and time-consuming but would nevertheless be a routine undertaking of engineering for those of ordinary skill in the art, having the benefit of this disclosure.

Furthermore, it is to be understood that the phraseology or terminology used herein is for the purpose of description and not of restriction, such that the terminology or phraseology of the present specification is to be interpreted by the skilled in the art in light of the teachings and guidance presented herein, in combination with the knowledge of those skilled in the relevant art(s). Moreover, it is not intended for any term in the specification or claims to be ascribed an uncommon or special meaning unless explicitly set forth as such.

The various aspects disclosed herein encompass present and future known equivalents to the known modules referred to herein by way of illustration. Moreover, while aspects and applications have been shown and described, it would be apparent to those skilled in the art having the benefit of this disclosure that many more modifications than mentioned above are possible without departing from the inventive concepts disclosed herein.

In general, it is noted that the foregoing description of the disclosure is provided to enable a person skilled in the art to make or use the disclosure. Various modifications to the disclosure will be readily apparent to those skilled in the art, and the common principles defined herein may be applied to other variations without departing from the scope of the disclosure. Furthermore, although elements of the described aspects may be described or claimed in the singular, the plural is contemplated unless limitation to the singular is explicitly stated. Additionally, all or a portion of any aspect may be utilized with all or a portion of any other aspect, unless stated otherwise. Thus, the disclosure is not to be limited to the examples and designs described herein but is to be accorded the widest scope consistent with the principles and novel features disclosed herein.

**Claims**

1. A method for interconnecting mixed species qubit entanglements with non-adiabatic gates, comprising:

   entangling at least a pair of interconnect qubits using photonic interconnects via a reconfigurable photonic entangler configured to entangle a pair of communication qubits from a plurality of quantum processing units (QPUs) such that photons entangled with interconnect qubit states are collected in optical fibers, wherein each QPU comprises at least a plurality of non-interconnect qubits, an interconnect qubit coupled to the reconfigurable photonic entangler with an optical fiber, and a non-adiabatic gate coupling the interconnect qubit to the plurality of non-interconnect qubits;

transferring information from the pair of entangled interconnect qubits to a respective non-communication qubit using the non-adiabatic gate; and
executing at least one quantum computation on at least one of the plurality of QPUs using a non-interconnect qubit as a resource for at least one gate between the plurality of QPUs.

2. The method of claim 1, wherein the non-interconnect qubit corresponds to a computational qubit.

3. The method of claim 1, wherein the non-interconnect qubit corresponds to a memory qubit.

4. The method of any one of claim 1-3, further comprising:
transferring information from the pair of entangled interconnect qubits by swapping states between one of the entangled interconnect qubits and a respective non-interconnect qubit.

5. The method of any one of claims 1-4, wherein the reconfigurable photonic entangler comprises at least:
a photonic switch configured to control optical signals.

6. The method of any one of claims 1-5, wherein the reconfigurable photonic entangler comprises at least:
a plurality of beam splitters configured to split incident light into separate beams.

7. The method of any one of claims 1-6, wherein the reconfigurable photonic entangler comprises at least:
a Bell state analyzer configured to detect Bell states.

8. The method of any one of claims 1-7, further comprising:
configuring the non-adiabatic gates to use internal states to move ions.

9. The method of any one of claims 1-8, further comprising:

performing state dependent kicks (SDK) to a first trapped ion or to a pair of trapped ions sequentially or simultaneously in an ion trap having a first trapping potential, the trapped ions being in a spin state and a first motional state prior to the first SDK; and
changing a first trapping potential of the ion trap to a second trapping potential of the ion trap.

10. The method of any one of claims 1-9, wherein the non-interconnect qubit has at least two orders of magnitude longer decoherence time than that of the interconnect qubit.

11. The method of any one of claims 1-10, further comprising:
executing quantum computations on each QPUs using the non-interconnect qubit as a resource for gates between the plurality of QPUs.

12. A quantum information processing (QIP) system, comprising:

a reconfigurable photonic entangler configured to entangle a pair of communication qubits from a plurality of quantum processing units (QPUs) such that photons entangled with interconnect qubit states are collected in optical fibers, wherein each QPU comprises at least a plurality of non-interconnect qubits, an interconnect qubit coupled to the reconfigurable photonic entangler with an optical fiber, and a non-adiabatic gate coupling the interconnect qubit to the plurality of non-interconnect qubits;
an optical system configured to generate pairs of optical pulses;
a ion trap configured to trap a first trapped ion of multiple arrays of trapped multi-species ions, the ion trap having a trapping potential that switchable between a first trapping potential and a second trapping potential; and
a controller configured to control the reconfigurable photonic entangler, the optical system, or the ion trap to:

entangle at least a pair of interconnect qubits using photonic interconnects via the reconfigurable photonic entangler;
transfer information from the pair of entangled interconnect qubits to a respective non-communication qubit using the non-adiabatic gate; and
executing at least one quantum computation on at least one of the plurality of QPUs using a non-interconnect qubit as a resource for at least one gate between the plurality of QPUs.

13. The QIP of claim 12, wherein the non-interconnect qubit corresponds to one of a computational qubit and a memory qubit.

14. The QIP of any one of claims 12-13, wherein at least one of the non-interconnect qubits has at least two orders of magnitude longer decoherence time than that of the interconnect qubit and the reconfigurable photonic entangler comprises at least a photonic switch configured to control optical signals.

15. The QIP of any one of claims 12-14, wherein the controller is further configured to control the reconfigurable photonic entangler, the optical system, and the ion trap to perform at least one of:

transfer information from the pair of entangled interconnect qubits by swapping states between one of the entangled interconnect qubits and a respective non-interconnect qubit;
configure the non-adiabatic gates to use internal states to move ions;
perform state dependent kicks (SDK) to a first trapped ion or to a pair of trapped ions sequentially or simultaneously in an ion trap having a first trapping potential, the trapped ions being in a spin state and a first motional state prior to the first SDK change a first trapping potential of the ion trap to a second trapping potential of the ion trap; and
execute quantum computations on each QPUs using the non-interconnect qubit as a resource for gates between the plurality of QPUs.

**FIG. 1**

## QIP system
## 200

### General controller
### 205

**Automation and calibration controller**
**280**

**Algorithms component**
**210**

**Optical and trap controller**
**220**

Imaging system
**230**

### Chamber
### 250

Source
**260**

Trap
**270**

# FIG. 2

Computer Device
300

Processor 310

CPU
310a

GPU
310b

QPU
310c

IPU
310d

Memory 320

Communications Component 330

Data Store 340

User Interface 350

Operating System 360

FIG. 3

EP 4 654 091 A1

**FIG. 4**

**FIG. 5**

EP 4 654 091 A1

**FIG. 6**

EP 4 654 091 A1

700a

703a

705a 707a

Photons entangled with
communication qubit
states are collected in
fibers

705b 707b

703b

⋮

Non-communication qubit

Communication qubit

*FIG. 7A*

700b

Swap state between entangled communication qubit and non-communication qubit using non-adiabatic gate

705a  707a

703a

705b  707b

703b

⋮

Non-communication qubit

Communication qubit

*FIG. 7B*

**FIG. 7C**

FIG. 8

EP 4 654 091 A1

*FIG. 9A*

FIG. 9B

EP 4 654 091 A1

**FIG. 9C**

EP 4 654 091 A1

1000 —

1001

Entangle at least a pair of interconnect qubits using photonic interconnects via a reconfigurable photonic entangler configured to entangle a pair of communication qubits from a plurality of quantum processing units (QPUs) such that photons entangled with interconnect qubit states are collected in optical fibers

1003

Transfer information from the pair of entangled interconnect qubits to a respective non-communication qubit using the non-adiabatic gate

1005

Execute at least one quantum computation on at least one of the plurality of QPUs using a non-interconnect qubit as a resource for at least one gate between the plurality of QPUs

*FIG. 10*

**FIG. 11**

EP 4 654 091 A1

**EP 4 654 091 A1**

| | Europäisches Patentamt<br>European Patent Office<br>Office européen des brevets | **EUROPEAN SEARCH REPORT** | **Application Number**<br>EP 25 17 8084 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DRMOTA P. ET AL: "Robust Quantum Memory in a Trapped-Ion Quantum Network Node", PHYSICAL REVIEW LETTERS, [Online] vol. 130, no. 9, 19 January 2023 (2023-01-19), XP093322399, US ISSN: 0031-9007, DOI: 10.1103/PhysRevLett.130.090803 Retrieved from the Internet: URL:https://arxiv.org/pdf/2210.11447> [retrieved on 2025-10-08] * abstract * * page 1, left-hand column, line 1 - page 5, left-hand column, last line * * Supplemental Material for Robust Quantum Memory in a Trapped-Ion Quantum Network Node * | 1-15 | INV.<br>G06N10/40<br>H04B10/70 |
| A | PUTNAM RANDALL ET AL: "Impulsive spin-motion entanglement for fast quantum computation and sensing", PHYSICAL REVIEW A, [Online] vol. 109, no. 3, 22 February 2024 (2024-02-22), pages 1-5, XP093322353, ISSN: 2469-9926, DOI: 10.1103/PhysRevA.109.032614 Retrieved from the Internet: URL:https://arxiv.org/pdf/2307.11287> [retrieved on 2025-10-08] * abstract * * page 1, left-hand column, line 1 - page 5, right-hand column, line 10 * | 1-15 | TECHNICAL FIELDS SEARCHED (IPC)<br><br>G06N<br>H04B |

-/--

The present search report has been drawn up for all claims

| Place of search | Date of completion of the search | Examiner |
|---|---|---|
| The Hague | 10 October 2025 | Totir, Felix |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 3

32

Europäisches
Patentamt

European
Patent Office

Office européen
des brevets

# EUROPEAN SEARCH REPORT

**Application Number**

EP 25 17 8084

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Drmota P ET AL: "Verifiable blind quantum computing with trapped ions and single photons", arXiv.org, 5 April 2024 (2024-04-05), pages 1-16, XP093322325, DOI: 10.48550/arxiv.2305.02936 Retrieved from the Internet: URL:https://arxiv.org/pdf/2305.02936 [retrieved on 2025-10-08] * abstract * * page 1, left-hand column, line 1 - page S15, left-hand column, line 10 * ----- | 1-15 | |
| X,P | Zain Mehdi ET AL: "Fast mixed-species quantum logic gates for trapped-ion quantum networks", arXiv.org, 26 March 2025 (2025-03-26), pages 1-18, XP093321982, Retrieved from the Internet: URL:https://arxiv.org/pdf/2412.07185 [retrieved on 2025-10-08] * abstract * * page 1, left-hand column, line 1 - page 7, left-hand column, line 25 * * page 9, line 1 - page 18, last line * ----- -/-- | 1-15 | TECHNICAL FIELDS SEARCHED (IPC) |

The present search report has been drawn up for all claims

| Place of search | Date of completion of the search | Examiner |
|---|---|---|
| The Hague | 10 October 2025 | Totir, Felix |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt

European Patent Office

Office européen des brevets

# EUROPEAN SEARCH REPORT

**Application Number**

EP 25 17 8084

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | SAHA SAGNIK ET AL: "High-fidelity remote entanglement of trapped atoms mediated by time-bin photons", NATURE COMMUNICATIONS, vol. 16, no. 1, 3 June 2024 (2024-06-03), pages 1-10, XP093322405, UK ISSN: 2041-1723, DOI: 10.1038/s41467-025-57557-4 * abstract * * page 1, left-hand column, line 1 - page 5, right-hand column, line 10 * * page 7, left-hand column, line 1 - page 10, right-hand column, last line * ----- | 1-15 | |

TECHNICAL FIELDS SEARCHED (IPC)

The present search report has been drawn up for all claims

| Place of search | Date of completion of the search | Examiner |
|---|---|---|
| The Hague | 10 October 2025 | Totir, Felix |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)